# FASCICULE DE BREVET EUROPEEN

(11) **EP 2 197 670 B1**
(45) Date de publication et mention de la délivrance du brevet: **15.06.2011**
(21) Numéro de dépôt: 08843292.7
(22) Date de dépôt: 01.10.2008
(51) Int. Cl.: B32B 17/02, B64C 7/00, B32B 17/06

(54) **CALE EN MATERIAU COMPOSITE RENFORCEE ET PROCEDE DE RENFORCEMENT D'UNE CALE EN MATERIAU COMPOSITE**
VERSTÄRKTER BLOCK AUS EINEM VERBUNDMATERIAL UND VERFAHREN ZUR VERSTÄRKUNG EINES VERBUNDBLOCKS
REINFORCED BLOCK MADE FROM COMPOSITE MATERIAL AND METHOD FOR REINFORCING A COMPOSITE BLOCK

(30) Priorité: 11.10.2007 FR 0758207
(43) Date de publication de la demande: 23.06.2010
(73) Titulaire: AIRBUS OPERATIONS (S.A.S), 31060 Toulouse (FR)
(72) Inventeur: ROUYRE, François, F-31700 Cornebarrieu (FR); MENARD, Sébastien, F-31270 Villeneuve Tolosane (FR); ROUX, Jacques, F-44830 Bouaye (FR)
(74) Mandataire: Lebrette, Camille
(86) Numéro de dépôt international: PCT/FR2008/051770
(87) Numéro de publication internationale: WO 2009/053573

(56) Documents cités:
- WO-A-03/072647
- FR-A- 2 869 872
- US-A- 4 470 862
- US-A1- 2006 249 627

## Description

L'invention concerne une cale en matériau composite renforcée pour pouvoir supporter des chocs et autres agressions extérieures. Notamment, l'invention concerne une cale en matériau composite destinée à être déposée sur l'extrados d'une aile d'aéronef de manière à restituer le profil aérodynamique dans la zone de fixation de ladite aile au fuselage d'un aéronef. L'invention concerne également un procédé de renforcement d'une cale en matériau composite.

Actuellement, il est connu dans de nombreux domaines de remplacer certaines pièces réalisées auparavant en matériau métallique par des pièces en matériau composite, de manière notamment à réduire la masse totale du dispositif muni d'une ou plusieurs de ces pièces. Ainsi, dans le domaine de l'aéronautique, de nombreuses pièces, telles que des poutres, des panneaux de recouvrement etc., sont désormais réalisées en matériau composite. Si cela permet d'obtenir de bons résultats du point de vue de la masse finale de l'aéronef, les pièces en matériau composite peuvent parfois présenter une résistance insuffisante face aux charges à supporter ou aux agressions de l'environnement extérieur.

C'est le cas notamment des cales de transition utilisées au niveau de la zone de fixation d'une aile d'aéronef audit fuselage d'aéronef, et destinées à restituer le profil aérodynamique de la voilure dans cette zone de fixation. De telles cales en matériau composite sont décrites dans le brevet FR 2 869 872. La cale de transition en matériau composite est située sur l'extrados de l'aile et est donc soumise aux intempéries et autres agressions extérieures. La cale de transitions est par exemple réalisée en mousse polyméthacrylimide, qui est une mousse dure et de faible poids, ce qui facilite sa manipulation et son installation sur l'extrados de la voilure d'un aéronef.

Cependant, la surface externe de ladite cale en matériau composite reste granuleuse, même après application d'une ou plusieurs couche(s) de peinture de protection.

Par ailleurs, il arrive fréquemment que la cale en matériau composite soit marquée, voire endommagée, au moment de sa fixation sur la voilure de l'aéronef. La cale se retrouve souvent bosselée par des empreintes de genou des installateurs, de pots de peinture utilisés pour recouvrir les cales etc. Les bossages formés sur la surface externe de la cale tendent à diminuer les performances aérodynamiques de l'aéronef, ce qui augmente notamment la consommation de carburant dudit aéronef.

Dans l'invention, on cherche donc à augmenter la résistance d'une cale en matériau composite, telle que celle utilisée comme cale de transition au niveau de la jonction entre une aile et le fuselage d'un aéronef.

Pour cela, dans l'invention, on propose de recouvrir la cale en matériau composite d'une ou plusieurs couche(s) de verre qui épouse(nt) un contour externe de la cale. Les couches de verre sont avantageusement polymérisées sur la masse centrale en matériau composite. Ainsi, quelle que soit la forme de la cale, elle est entièrement recouverte de couches de verre lissant la surface externe et la renforçant vis-à-vis des agressions externes. L'invention propose également un procédé de renforcement d'une cale dans lequel on recouvre ladite cale en matériau composite d'une ou plusieurs couche(s) de verre. Le procédé selon l'invention utilise un moule apte à supporter de fortes températures et pouvant être démonté de manière à libérer la cale une fois les couches de verre polymérisées sur la masse centrale en matériau composite.

L'invention a donc pour objet une cale destinée à être fixée à l'extrados d'une aile d'aéronef selon la revendication 1, comportant un coeur en matériau composite et au moins un pli de verre recouvrant au moins partiellement une surface, ou paroi, externe du coeur en matériau composite.

Selon des exemples de réalisation de la cale selon l'invention, il est possible de prévoir tout ou partie des caractéristiques supplémentaires suivantes :
- La cale comporte trois plis de verre superposés de manière à former trois couches successives autour du coeur en matériau composite ;
- Le matériau composite formant le coeur de la cale est une mousse polymethacrylimide.

L'invention concerne également un procédé de renforcement d'une cale en matériau composite selon la revendication 4 comportant les étapes suivantes :
- on dispose un premier pli de verre inférieur dans un moule, de manière à recouvrir un fond du moule et à ce que des rebords du pli de verre inférieur dépassent de part et d'autre de parois latérales dudit moule ;
- on loge la cale dans le moule, face externe dirigée vers l'extérieur du moule ;
- on rabat les rebords du pli de verre inférieur sur la cale, de manière à ce que le pli de verre épouse un contour externe de la cale ;
- on ferme le moule par un couvercle ;
- on fait cuire la cale logée dans le moule dans une étuve de manière à polymériser le pli de verre ;
- on récupère la cale recouverte du pli de verre.

Selon des exemples de mise en oeuvre du procédé selon l'invention, il est possible de prévoir tout ou partie des étapes supplémentaires suivantes :
- on dispose un second plis de verre inférieur dans le moule, de manière à recouvrir le premier plis de verre inférieur ; on procède de même avec un troisième plis de verre inférieur recouvrant le second plis de verre inférieur ; on arase le troisième plis de verre inférieur au niveau du plan de joint ; on rabat successivement les trois plis de verre inférieur sur la face externe de la cale. Dans le cas où les dimensions de la cale et du moule sont strictement supérieures aux dimensions des bandes de plis de verre utilisées, on utilise plusieurs bandes disposées adjacentes dans le moule pour former un pli de verre donné.
- on recouvre une face externe de la cale d'un premier plis de verre supérieur avant de loger ladite cale dans le moule. Ainsi, si les dimensions des plis de verre inférieurs sont insuffisantes pour couvrir toute la surface du coeur de la cale, la face externe dudit coeur est recouvert par le ou les plis de verre supérieurs, tandis que la face interne et les parois latérales dudit coeur de la cale sont recouverts par les plis de verre inférieurs.
- on fait cuire la cale dans une étuve en augmentant progressivement la température, à raison de 2°C/minute jusqu'à une température palier de 150°C +/-20°C ; on maintient la température palier pendant 2 heures, +/- 15 minutes.
- on utilise un moule comportant un fond sur lequel sont montés quatre parois latérales, et un couvercle amovible ; après l'étape de cuisson, on retire le couvercle et les quatre parois latérales du moule afin d'extraire la cale recouverte de plis de verre.

L'invention sera mieux comprise à la lecture de la description qui suit et à l'examen des figures qui l'accompagnent. Celles-ci sont présentées à titre indicatif et nullement limitatif de l'invention. Les figures représentent :
- figure 1 : une représentation schématique d'un premier exemple de cale en matériau composite pouvant être recouverte de plis de verre selon l'invention ;
- figure 2 : une représentation schématique d'un second exemple de cale en matériau composite recouverte de plis de verre selon l'invention ;
- figures 3A, 3B et 3C : trois agrandissements en coupe de la cale de la figure 2, au niveau respectivement d'une pointe avant, d'une section centrale et d'une section arrière ;
- figure 4 : une représentation schématique en coupe transversale d'un moule utilisé pour la mise en oeuvre du procédé selon l'invention ;
- figure 5 : une représentation schématique en coupe transversale du moule selon l'invention dans lequel est logée la cale destinée à être recouverte de plis de verre.

Dans les exemples décrits par la suite, on se réfère uniquement à des cales de transition destinées à être fixées sur l'extrados d'une aile d'aéronef de manière à faciliter le passage d'un joint depuis le moyen de fixation de l'aile sur le fuselage d'un aéronef jusqu'à l'extrados de ladite aile. Bien entendu, l'invention peut également s'appliquer à toute autre sorte de cale en matériau composite, quelles que soient ses dimensions.

Une telle cale de transition peut avoir une longueur de plusieurs dizaines de mètre et une épaisseur variable d'un bout à l'autre de la cale. Par longueur, on entend la dimension de ladite cale s'étendant parallèlement à l'axe longitudinal de la cale. Par épaisseur, on entend la dimension de la cale s'étendant verticalement par rapport à un plan dans lequel s'étend la cale.

Par la suite, on entend par face externe la face de la cale dirigée vers l'extérieur du moule et par face interne la face de la cale en contact avec le fond du moule. Par contre, lors de son utilisation, c'est la face externe de la cale qui est solidarisée à l'extrados de l'aile de l'aéronef, et la face interne qui est soumises aux agressions extérieures.

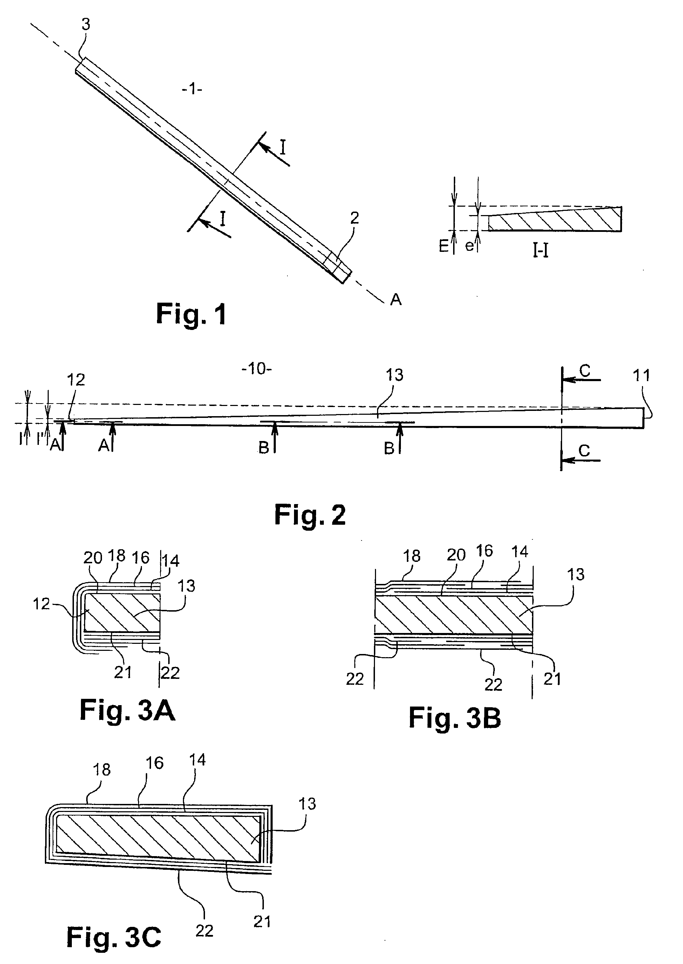

Sur la figure 1 est représenté un premier exemple de cale 1 en matériau composite, destine à être fixée à l'extrados d'une aile d'aéronef.

La cale 1 comporte une extrémité biseautée 2, une seconde extrémité 3, opposée à l'extrémité biseautée 2, étant droite. Par ailleurs, comme cela est visible sur la coupe I-I, l'épaisseur E, e de la cale 1 est décroissante dans la largeur. Par largeur, on entend la dimension de la cale 1 s'étendant transversalement par rapport à l'axe longitudinal A de la cale 1.

Sur la figure 2 est représenté un deuxième exemple de cale de transition 10, ladite cale 10 ayant une épaisseur constante, mais une largeur I, I' décroissante depuis une première extrémité 11 jusqu'à une deuxième extrémité 12, les deux extrémités étant droites, par opposition à une extrémité biseautée.

La cale 10 comporte un coeur 13 en matériau composite recouvert d'au moins un pli de verre augmentant la résistance de la cale 10 face aux agressions extérieures.

Avec le procédé selon l'invention, n'importe quelle cale peut être recouverte d'un ou plusieurs plis de verre, et ce quelles que soient ses dimensions, sa forme etc.

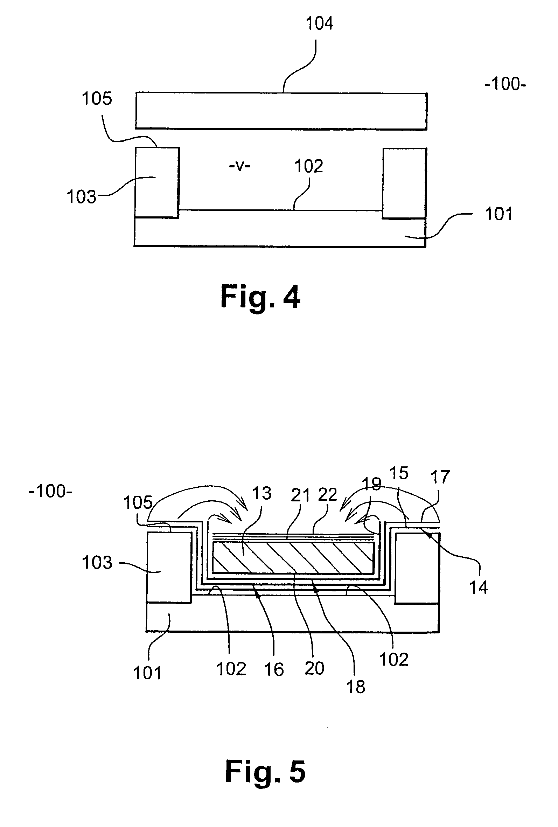

Pour se faire, conformément au procédé de l'invention, on utilise un moule 100 tel que représenté à la figure 4.

Le moule 100 comporte un fond, ou base 101, dont une face interne 102 est destinée à recevoir la cale 10. Par face interne 102, on entend la face logée dans un volume interne V du moule 100. Ledit moule 100 comporte par ailleurs quatre parois latérales 103 (seulement deux parois latérales gauche et droite sont visibles sur la figure 4), lesdites parois latérales 103 étant amovibles de manière à pouvoir être désolidarisées du fond 101. Le moule 100 comporte par ailleurs un couvercle 104 apte à être scellé sur les extrémités supérieures 105 des parois latérales 103 de manière à fermer hermétiquement le volume interne V du moule 100.

Le volume interne V du moule 10 est apte à recevoir la cale 10.

Conformément au procédé de l'invention, on commence par disposer un premier pli de verre inférieur 14 contre la paroi interne 102 du fond 101 du moule 100. Le premier pli de verre inférieur 14 épouse un contour du moule 100, recouvrant le fond 102 et les parois latérales 103 jusqu'aux extrémités 105. Plus précisément, les bords extérieurs 15 du premier pli de verre inférieur 14 sont accolés contre les extrémités 105 des parois latérales 103. Le premier pli de verre inférieur 15 est le pli destiné à être en contact avec l'extérieur par rapport au coeur de mousse 13 qu'il entoure.

On dispose ensuite un second pli de verre inférieur 116 recouvrant le premier pli de verre inférieur 14. Les rebords 17 du second pli de verre inférieur 16 recouvrent les rebords externes 15 du premier pli de verre inférieur 14.

Puis, on dispose un troisième pli de verre inférieur 18 sur le second pli de verre inférieur qu'il recouvre.

Les rebords externes 19 du troisième pli de verre inférieur 18 sont arasés au niveau des extrémités 105 des parois latérales 103 du moule 100. On évite ainsi qu'il y ait une surépaisseur excessive sur la face externe 21 du coeur 13 de la cale 10 du fait du repliage des rebords 15, 17, 19 des plis de verre 14, 16, 18 contre ladite face externe 21.

On dispose alors le coeur en matériau composite 13 de la cale 10 dans le volume interne V du moule 100 de manière à ce qu'une face interne 20 dudit coeur en matériau composite 13 soit disposée contre la paroi interne 102 du fond 101 du moule 100.

Dans l'exemple représenté à la figure 5, la face externe 21 du coeur en matériau 13 a été préalablement recouverte de trois plis de verre supérieurs 22 superposés les uns au-dessus des autres. Cela permet d'assurer une étanchéité au niveau du coeur 103 de la cale 10, en garantissant que toute la surface du coeur 103 est recouverte par au moins un pli de verre. En effet, si la face externe 21 du coeur en matériau composite 13 n'est pas recouverte par ses propres plis de verre, il est possible si les dimensions des plis de verres inférieurs sont insuffisantes qu'une portion centrale du coeur 13 de la cale 10 ne soit pas recouverte une fois les plis de verre inférieurs repliés sur la face externe du coeur 13 de la cale 10.

Bien entendu, les plis de verre supérieurs 22 peuvent être disposés sur la face externe 21 du coeur en matériau composite 13 une fois seulement que celui-ci a été logé dans le moule 100, avant de rabattre les bords 19, 17, 15 des plis inférieurs 14, 16, 18 sur ladite face externe 21, voire même après avoir rabattu lesdits bords 19, 17, 15 sur ladite face externe 21.

Une fois le coeur en matériau composite 13 logé dans le volume interne V du moule 100, on rabat les rebords externes 19 du troisième pli de verre inférieur 18 contre la paroi externe 21 du coeur 13 puis les rebord externes 17 du second pli de verre inférieur 16 et enfin les rebords externes 15 du premier pli de verre inférieur 14.

Les plis de verre 14, 16, 18, 22 sont ainsi drapés sur le coeur de mousse 13 en en suivant son contour.

Avant de rabattre les plis de verre inférieurs 14, 16, 18 sur la paroi externe 21 du coeur 13, il est possible de découper les angles des plis de verre, ou de certains d'entre eux seulement, à 45° par exemple, de manière à éviter un chevauchement excessif des plis de verre 14, 16, 18 pouvant conduire à une surépaisseur locale préjudiciable.

On ferme ensuite le volume interne V du moule 100 au moyen du couvercle 104 que l'on solidarise par tous moyens aux parois latérales 103.

Le moule 100 est ensuite mis en étuve et chauffé à raison de 2°C par minute jusqu'à 150°C, puis est laissé à cette température pendant un palier de deux heures.

On sort alors le moule 100 de l'étuve et on le laisse refroidir par convection naturelle jusqu'à 60°.

On ouvre le moule 100 de manière à en extraire la cale 10. Pour cela, on démonte les parois latérales 103 du fond 101 de manière à pouvoir aisément ressortir la cale 10 dudit moule 100.

Les figures 3A, 3B et 3C représentent différentes coupes de la cale 10 recouverte de plis de verre conformément à l'invention. Bien entendu, la cale 10 peut être recouverte de plus ou moins de plis de verre, selon l'épaisseur desdits plis et selon la destination de la cale.

Ainsi, sur la figure 3A est représentée en coupe longitudinale l'extrémité avant 12 de la cale 10.

Trois plis de verre supérieurs 22 recouvrent la paroi externe 21 du coeur en matériau composite 13 de la cale 10, destinée à être fixée à l'extrados de la voilure d'un aéronef. Les trois plis de verre inférieurs 14, 16 et 18 suivent eux un contour externe de la paroi interne 20 du coeur en matériau composite 13, destinée à subir les agressions extérieures. Au niveau de cette extrémité 12, il y a recouvrement des plis supérieurs 22 par les plis inférieurs 14, 16, 18, ce qui permet d'assurer une étanchéité du coeur en matériau composite 13 par la protection en verre.

Sur la figure 3B est représentée en coupe longitudinale la cale 10 à un endroit quelconque de ladite cale 10.

Ainsi, on peut voir les trois plis supérieurs 22 recouvrant la face externe 21 du coeur 13 de la cale 10, ainsi que les trois plis inférieurs 14, 16, 18 recouvrant la face interne 20 dudit coeur 13.

Dans l'exemple représenté à la figure 3B, chaque pli de verre 14, 16, 18, 22 considéré est formé par plusieurs bandes de tissu pré-imprégé disposées les unes à la suite des autres dans un même plan. Bien entendu, si les bandes de tissu pré-imprégé utilisées ont des dimensions suffisantes, il est possible d'en utiliser une par pli. Cependant, dans le cas d'une cale 10 de grande dimensions, l'utilisation de plusieurs bandes de tissu pré-imprégné pour former un pli de verre donné permet de faciliter la mise en place dans le moule 100 : plutôt que de manoeuvrer une seule bande de tissu pré-imprégé de grandes dimensions à poser contre le fond 102 du moule 100 et contre les parois latérales 103 dudit moule 100, sur toute la longueur dudit moule, on dispose plusieurs petites bandes de tissu pré-imprégné, les une à la suite des autres pour couvrir toute la surface interne du moule 100.

Sur la figure 3C est représentée une coupe transversale de la cale 10 à un endroit quelconque de ladite cale 10, montrant le coeur en matériau composite 13 entouré de la succession de plis de verre 14, 16, 18 et 22 formant une coque de protection étanche autour dudit coeur 13.

Dans le cas particulier des cales de transition destinées à être fixées à l'extrados d'une aile d'aéronef, chaque pli de verre a avantageusement une épaisseur de 0,22 mm +/- 0.05mm.

## Revendications

1. Cale (10) destinée à être fixée à l'extrados d'une aile d'aéronef, comportant un coeur en matériau composite (13), **caractérisée en ce qu'**elle comporte au moins un pli de verre inférieur (14, 16, 18) recouvrant au moins une face interne du coeur en matériau composite et au moins un pli de verre supérieur (22) recouvrant une face externe du coeur en matériau composite, lesdits plis de verre recouvrant entièrement une surface externe (20, 21) du coeur en matériau composite.

2. Cale selon la revendication 1, **caractérisée en ce qu'**elle comporte trois plis de verre (14, 16, 18, 22) superposés de manière à former trois couches successives autour du coeur en matériau composite.

3. Cale selon l'une des revendications 1 à 2, **caractérisé en ce que** le coeur en matériau composite est en mousse polymethacrylimide.

4. Procédé de renforcement d'une cale (10) en matériau composite destinée à être fixée à l'extrados d'une aile d'aéronef **caractérisé en ce qu'**il comporte les étapes suivantes :
- on dispose un premier pli de verre inférieur (14) dans un moule (100), de manière à recouvrir un fond (102) du moule et à ce que des rebords (15) du pli de verre inférieur dépassent de part et d'autre de parois latérales (103) dudit moule ;
- on loge la cale dans le moule, une face externe (21) de ladite cale étant préalablement ou ultérieurement recouverte d'au moins un pli de verre supérieur (22) ;
- on rabat les rebords du premier pli de verre inférieur sur la cale, de manière à ce que le pli de verre épouse un contour externe de la cale ;
- on ferme le moule par un couvercle (104) ;
- on fait cuire la cale logée dans le moule dans une étuve de manière à polymériser les plis de verre ;
- on récupère la cale recouverte du pli de verre.

5. Procédé selon la revendication 4, **caractérisé en ce qu'**il comporte les étapes supplémentaires suivantes :
- on dispose un second pli de verre inférieur (16) dans le moule, de manière à recouvrir le premier pli de verre inférieur ;
- on procède de même avec un troisième pli de verre inférieur (18) recouvrant le second pli de verre inférieur ;
- on arase le troisième pli de verre inférieur au niveau du plan de joint ;
- on rabat successivement les trois plis de verre inférieur sur la face externe de la cale.

6. Procédé selon l'une des revendications 4 à 5, **caractérisé en ce qu'**il comporte les étapes supplémentaires suivantes :
- on fait cuire la cale dans une étuve en augmentant progressivement la température, à raison de 2°C/minute jusqu'à une température palier de 150°C +/- 20°C ;
- on maintient la température palier pendant 2 heures, +/- 15 minutes.

7. Procédé selon l'une des revendications 4 à 6, **caractérisé en ce qu'**il comporte les étapes supplémentaires suivantes :
- on utilise un moule comportant un fond (102) sur lequel sont montés quatre parois latérales (103), et un couvercle (104) amovible ;
- après l'étape de cuisson, on retire le couvercle et les quatre parois latérales du moule afin d'extraire la cale recouverte de plis de verre.

## Claims

1. A block (10) intended to be attached to the upper surface of an aircraft wing, comprising a core made out of composite material (13), **characterised in that** it comprises at least one lower glass ply (14, 16, 18) covering at least one inner face of the core made out of composite material and at least one upper glass ply (22) covering an outer face of the core made out of composite material, said glass plies fully covering an outer surface (20, 21) of the core made out of composite material.

2. A block according to claim 1, **characterised in that** it comprises three glass plies (14, 16, 18, 22) superimposed so as to form three successive layers around the core made out of composite material.

3. A block according to one of claims 1 to 2, **characterised in that** the core made out of composite material is made from polymethacrylimide foam.

4. A method for reinforcing a block (10) made out of composite material, intended to be attached to the upper surface of an aircraft wing, **characterised in that** it comprises the following steps :
- a first lower glass ply (14) is placed in a mould (100), so as to cover a base (102) of the mould and so that the edges (15) of the lower glass ply overrun on either side of the lateral walls (103) of said mould ;
- the block is housed within the mould, an outer face (21) of said block being previously or subsequently covered by at least one upper glass ply (22) ;
- the edges of the first lower glass ply on the block are folded so that the glass ply is moulded to an external outline of the block ;
- the mould is closed with a cover (104) ;
- the block housed within the mould is cured in an oven so as to polymerise the glass plies ;
- the glass-ply-covered block is recovered.

5. A method according to claim 4, **characterised in that** it comprises the following additional steps :
- a second lower glass ply (16) is placed in the mould so as to cover the first lower glass ply ;
- the same method is applied for a third lower glass ply (18) covering the second lower glass ply ;
- the third lower glass ply is planed down at the mating surface ;
- the three lower glass plies are folded successively on the outer face of the block.

6. A method according to one of claims 4 to 5, **characterised in that** it comprises the following additional steps :
- the block is cured in an oven by progressively increasing the temperature by 2°C/minute to reach a threshold temperature of 150°C +/- 20°C ;
- the threshold temperature is maintained for 2 hours +/- 15 minutes.

7. A method according to one of claims 4 to 6, **characterised in that** it comprises the following additional steps :
- a mould is used, comprising a base (102) on which four lateral walls (103) and a removable cover (104) are assembled ;
- after the curing step, the cover and the four lateral walls of the mould are removed so as to extract the glass-ply-covered block.

## Patentansprüche

1. Keil (10) an eine Oberseite von einem Flügel eines Flugzeugs zu befestigen bestimmt, aufweisend einen Kern aus Verbundmaterial (13), **dadurch gekennzeichnet, dass** er mindestens eine untergelegene Glasschicht (14, 16, 18) aufweist, die mindestens eine Innenseite des Kerns aus Verbundmaterial bedeckt und mindestens eine übergelegene Glasschicht (22), die eine Außenseite des Kerns aus Verbundmaterial bedeckt, wobei die sogenannten Glasschichten eine Außenfläche (20, 21) des Kerns aus Verbundmaterial ganz bedecken.

2. Keil nach Patentanspruch 1, **dadurch gekennzeichnet, dass** er drei übereinander gesetzten Glasschichten (14, 16, 18, 22) umfasst so, dass drei mehrstufigen Schichten um den Kern aus Verbundmaterial gebildet werden.

3. Keil nach einem der Patentenansprüche 1 bis 2, **dadurch gekennzeichnet, dass** der Kern aus Verbundmaterial aus Polymethacrylimid-Schaum besteht.

4. Keilverstärkungsverfahren (10) aus Verbundmaterial an eine Oberseite von einem Flügel eines Flugzeugs zu befestigen bestimmt, **dadurch gekennzeichnet, dass** es die folgenden Schritten aufweist:
- eine erste (14) untergelegene Glasschicht wird in eine Form (100) aufgestellt so, dass einen Formboden (102) bedeckt wird und dass Ränder (15) der untergelegenen Glasschicht beiderseits von Seitenwänden (103) der sogenannten Form hinausragen ;
- der Keil wird in die Form untergebracht, wobei die Außenseite (21) des sogenannten Keils vorab oder anschließen von mindesten einer übergelegenen (22) Glasschicht bedeckt ist ;
- die Ränder der untergelegenen Glasschicht werden über den Keil umgeschlagen so, dass sich die Glasschicht an eine außenseitliche Kontur des Keils anpasst ;
- Die Form wird mit einem Deckel (104) geschlossen ;
- Der in die Form aufgestellte Keil wird in einem Schwitzkasten gekocht so, dass die Glasschichten polymerisiert werden ;
- Der von der Glasschicht bedeckte Keil wird rausgeholt.

5. Verfahren nach Patentanspruch 4, **dadurch gekennzeichnet, dass** es die folgenden zusätzlichen Schritte aufweist:
- Eine zweite (16) untergelegene Glasschicht wird in die Form aufgestellt so, dass die erste untergelegene Glasschicht bedeckt wird ;
- Ebenso wird mit einer dritten (18) untergelegenen Glasschicht, die die zweite untergelegene Glasschicht bedeckt, verfahren ;
- Die dritte untergelegene Glasschicht wird an der Dichtungsebene abgeschliffen ;
- Aufeinanderfolgend werden die drei untergelegenen Glasschichten über die Außenseite des Keils umgeschlagen.

6. Verfahren nach einem der Patentenansprüche 4 bis 5, **dadurch gekennzeichnet, dass** es die folgenden zusätzlichen Schritte aufweist:
- Der Keil wird in einem Schwitzkasten gekocht, wobei die Temperatur schrittweise um 2°C/minute bis zu einer Temperaturlage von 150°C +/-20°C erhöht wird ;
- Die Temperaturlage wird während 2 Stunden, +/- 15 Minuten erhalten.

7. Verfahren nach einem der Patentenansprüche 4 bis 6, **dadurch gekennzeichnet, dass** es die folgenden zusätzlichen Schritte aufweist:
- Eine einen Boden (102) aufweisende Form auf welchen vier Seitenwände (103) und einen abnehmbaren Deckel (104) aufgestellt sind, wird benutzt ;
- Nach der Kochphase werden der Deckel und die vier Seitenwände der Form abgenommen, um den von Glasschichten abgedeckten Keil herauszuholen.
